(19) Europäisches Patentamt
European Patent Office
Office européen des brevets

(11) **EP 3 188 334 B1**

(12) **EUROPEAN PATENT SPECIFICATION**

(45) Date of publication and mention
of the grant of the patent:
**15.04.2020 Bulletin 2020/16**

(51) Int Cl.:
***H02H 7/085*** (2006.01)     ***E04F 10/10*** (2006.01)

(21) Application number: **16207110.4**

(22) Date of filing: **28.12.2016**

(54) **CONTROL DEVICE OF THE MOTOR FOR MOVING A BLADE CLOSURE OF A PERGOLA OR THE LIKE**

STEUERUNGSVORRICHTUNG DES MOTORS ZUM BEWEGEN EINES BLATTVERSCHLUSSES EINER PERGOLA ODER DERGLEICHEN

DISPOSITIF DE COMMANDE DU MOTEUR DESTINÉ À DÉPLACER UNE FERMETURE DE PALE D'UNE PERGOLA OU ANALOGUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.12.2015 IT UB20159210**

(43) Date of publication of application:
**05.07.2017 Bulletin 2017/27**

(73) Proprietor: **Teleco Automation S.R.L.
31100 Treviso (IT)**

(72) Inventors:
• **BORSOI, Luigi
31100 TREVISO (IT)**
• **COLLOVINI, Roberto
31100 TREVISO (IT)**

(74) Representative: **Piovesana, Paolo
c/o Praxi Intellectual Property S.p.A.- Venezia
Via Francesco Baracca, 5/A
30173 Venezia-Mestre (IT)**

(56) References cited:
**EP-A2- 0 692 856      US-A1- 2005 156 547
US-A1- 2014 239 867**

## Description

The present invention relates to a control device of the motor for moving a blade closure of a pergola or the like.

So-called "pergolas" are known, which generally consist of parallelepiped structures delimited at the top and possibly on the side walls by a plurality of substantially rigid parallel blades, which may be oriented simultaneously about the longitudinal axis thereof and are possibly packable.

The orientation movements of the blades (but the same also applies to the translation movements for inducing the packing/spacing apart thereof) are obtained generally with a direct current motor, which speed and stroke-end positions are controlled by an electronic board which controls the stop of the motor when a preset value is exceeded of the current absorbed by the motor itself at the stroke-end positions.

This preset value of the current absorbed in turn is defined with a self-learning process after bringing the motor to the stroke-end positions and detecting the greatest absorption of current by the motor thereat.

US 2005/0156547 describes a method and an apparatus for automatically setting the force the motor should develop in order to induce the opening of a movable barrier, and in particular a barrier for the operator. In particular, it proposes to compensate the value which is typical of the force that the motor should develop (and therefore of the current to be absorbed) with a compensation coefficient which depends on the difference between the maximum threshold force and the actual one, and on the difference between the actual temperature and the preceding one. In greater detail, the compensation coefficient depends on the temperature variations between two successive detection instants and is constructed so that the higher the variation in temperature, the higher it is.

EP0692856 describes a controller for moving a motor of a movable element in general (windows, doors, seat of a vehicle, etc.) in which a complex predictive function is implemented which identifies the optimal values in a recursive manner between a plurality of profiles of current absorbed by the motor so as to define the most suitable one, under each specific condition. Moreover, the predictive function is configured to promptly consider the variations in temperature.

Both of the aforesaid solutions provide processes which are rather burdensome both in terms of calculation time and in terms of hardware and/or software resources required, thus resulting in an increase in the costs for the implementation thereof.

Furthermore, neither of the two solutions is specifically optimized for controlling the motor for moving the blades of a pergola.

Not last, the fact that the temperature compensation occurs while considering the temperature variations which occur under successive conditions which however always occur during the regular and actual operation of the motor. This is not completely satisfactory since it, in no manner, provides considering the temperature variation there could be between the condition of normal and actual operation of the motor and the condition of calibration of the same.

Indeed, it should be considered that the motor for actuating the blades generally is positioned outside and therefore the temperature thereof is highly affected by the outside ambient conditions. If for example, the motor is cold, either because the outside temperature is particularly rigid or because the motor remained inactive for more than a given time, the absorption of current may increase even by 20 to 30%. This results in a malfunction of the control system in that it might not interrupt the supply current of the motor when it has reached a stroke-end position should the actual temperature thereof be significantly less than the calibration temperature, or it could interrupt the supply current and therefore stop the motor when it has not reached a stroke-end position should it operate at an actual temperature which is significantly higher than the calibration temperature.

It is the object of the invention to eliminate these drawbacks and to propose a control device which is optimized specifically for the motor for moving the blades of a pergola or the like.

It is another object of the invention to propose a device which is suitable for controlling a plurality of motors which are currently available on the market and which may be used to induce the movement of the blades of a pergola.

It is another object of the invention to propose a device which readily identifies the stroke-end positions in a certain manner in order to opportunely control the stop of the motor.

It is another object of the invention to control the stop of the motor at the stroke-end positions, independently of the temperature of the motor and of the difference between this temperature and the temperature at which the calibration of the device was performed.

It is another object of the invention to promptly control the stop of the motor also in the presence of an obstacle which obstructs the movement of the blades of the pergola.

It is another object of the invention to propose a control device which also may be implemented in existing systems.

It is another object of the invention to propose an improved and/or alternative control device with respect to traditional ones.

It is another object of the invention to propose a control device which does not require complex and/or costly hardware and/or software processing resources.

It is another object of the invention to propose a device which may be obtained and configured in a simple, quick and affordable manner.

It is another object of the invention to control the operation of a motor for moving the blades of a pergola in a rather simple manner while simultaneously being safe and reliable.

These objects, both individually and in any combination thereof, and others which will become apparent from the description below are achieved according to the invention, with a control device of the motor for moving a blade closure of a pergola or the like, with the characteristics indicated in claim 1, and with a motorized pergola with the characteristics indicated in claim 10.

The present invention is hereinbelow further clarified in certain preferred embodiments thereof, which are described by mere way of non-limiting example, with reference to the accompanying drawings, in which:

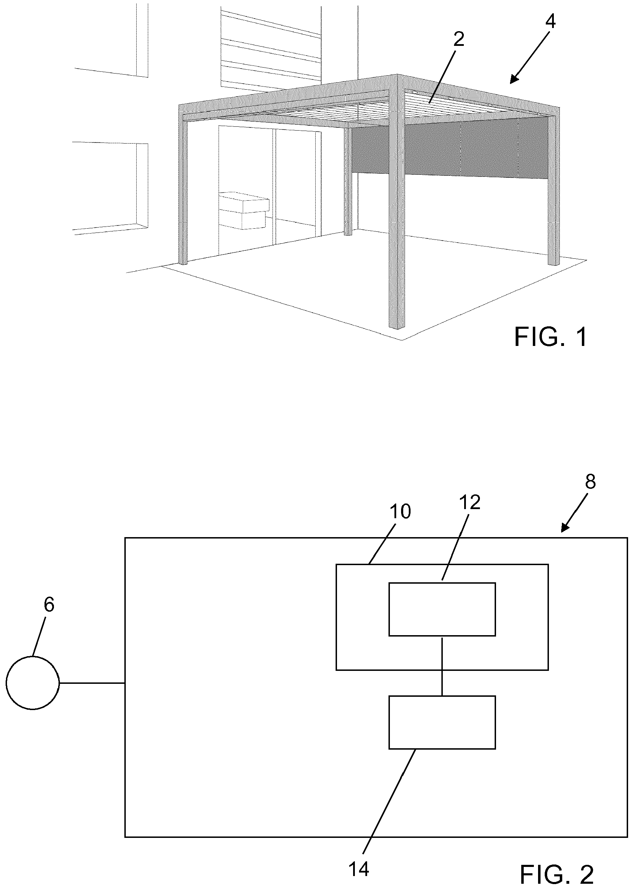

Figure 1    diagrammatically shows a pergola provided with motorized blades, and

Figure 2    shows a block diagram of the control device according to the invention.

As illustrated in the drawings, the control device according to the invention applies to a traditional drive system of the blades 2 of a pergola 4 which may be oriented and/or are packable. The blades 2 are operated by a motor 6 controlled by a management control unit 8. In particular, motor 6 may be prepared to induce the rotating movement of said blades 2 about a longitudinal axis thereof and/or may be prepared to induce the translating movement of the blades 2 between a first position in which they are mutually spaced apart and a second position in which they are packed, and i.e. they are mutually close together, preferably in contact with one another.

Conveniently, the control unit 8 may also control several motors, e.g. two motors, both independently to move the blades 2 of two different pergolas 4 and simultaneously in order to move the blades 2 of a same large pergola 4, which is precisely provided with blades 2 having correspondingly large dimensions and such as to suggest the use of two motors for the movement thereof. In any case, reference is made in the present description to one motor 6 alone, moreover intending that the same teachings also apply when there are two motors.

In particular, the control unit 8 is provided with an electronic board 10 in which a microcontroller 12 is mounted which detects the current absorbed by motor 6 during the operation thereof and compares it with a preset threshold value, which when exceeded, interrupts the supply of the motor.

Preferably, this threshold value is obtained in the step of installation and/or calibration with a learning process (i.e. automatic detection and saving) of the current values detected.

Advantageously, the electronic board 10 is also associated with the inputs for controlling the self-learning step and for controlling motor 6 via cable and via radio, but they are similar to the ones of traditional control devices and for this are not described in detail.

Moreover, unlike traditional control devices, the device according to the invention also provides for a sensor 14 of the ambient temperature $T_A$ in which both the control unit 8 and motor 6 are arranged, the sensor to be associated with the control unit 8 or preferably mounted therein. In particular, sensor 14 detects the ambient temperature $T_A$ and sends the value thus detected to the microcontroller 12 input of the control unit 8.

During operation, when the movement of the blades 2 is required, a corresponding control is imparted in a traditional manner via cable or via radio, to the control unit 8 which supplies motor 6.

For the entire time the motor is operating, microcontroller 12 of the control unit 8 detects the current absorbed by the motor itself, and in particular the greatest current which is absorbed at the stroke-end positions thereof due to the forced stop, and compares it with an actual threshold value $I_A$ which is obtained from the threshold value $I_{A0}$ determined in the calibration step at an ambient temperature equal to $T_{A0}$ and then conveniently corrected to refer to the real/actual ambient temperature $T_A$.

This correction considers both a standard safety increase equal to or greater than about 10% of value $I_{A0}$, and preferably equal to 35% of $I_{A0}$, and the increased value of the absorption current at stroke end when motor 6 is at a temperature $T_A$ which is less than the calibration temperature $T_{A0}$, and i.e. at a temperature $T_A<T_{A0}$.

Microcontroller 12 of the control unit 8 is programmed to calculate the value of the actual current $I_A$ from the value of current $I_{A0}$, which actual current induces the interruption of the supply of motor 6, by means of the following algorithm:

$$I_A = I_{A0} \, (1+a+P_T)$$

in which:

$I_A$    is the value of the actual threshold current, and i.e. the value of current which should induce the interruption of the supply of the motor during the actual operation,

$I_{A0}$    is the value of the current absorbed by the motor at the stroke-end positions and determined during the calibration step performed at the ambient temperature $T_{A0}$,

a    is a safety parameter which is not to be less than 0.1 (and i.e. less than 10% of current $I_{A0}$) and is preferably equal to 0.35,

$P_T$    is a corrective coefficient associated with the difference in temperature and considers the greatest current absorption that a motor involves if it operates in an ambient with a temperature which is lower than the temperature at which the device was calibrated during the calibration step, which preferably is performed by means of a self-learning process. In particular, such a coefficient is given by the expression

$$P_T = b\,(T_{A0} - T_A)$$

in which:

b        is comprised between 0.002 and 0.02 and preferably is equal to 0.01,

$T_{A0}$   is the ambient temperature under the conditions in which the calibration of the device was performed,

$T_A$     is the ambient temperature during the actual operation.

Furthermore, this coefficient $P_T$ only takes on positive values and this means that when the calibration ambient temperature $T_{A0}$ of the device is less than the actual ambient temperature $T_A$, parameter $P_T$ is set to zero ($P_T = 0$ if $T_{A0} < T_A$).

Advantageously, the programming of the microcontroller by means of the aforesaid algorithm allows the temperature conditions to be considered in which the motor actually operates, conditions which generally are different from the temperature conditions at which the device was calibrated.

Conveniently, microcontroller 12 programmed and operating by means of the aforesaid algorithm, is optimized to control motors for moving the blades of a pergola in order to thus avoid circumstances in which the interruption of the supply of the motor occurs too soon (thus inducing an incomplete closure of the blades) or too late (thus inducing an excessive mechanical thrust by the motor which risks damaging the blades or the means for transmitting the motion thereto).

Furthermore, the ranges of parameters "a" and "b" are conveniently selected to optimally control a plurality of motors available on the market and which may be used to move the blades of a pergola. Should an even more accurate determination of the current value $I_A$ be required in the actual conditions of use of motor 6, the invention advantageously provides also associating a timer with the control unit 8 or preferably providing it therein, the timer configured to send both the operation and pause time instants of the motor to the microcontroller 12 input of the control unit 8.

Advantageously, a further corrective factor which considers the inactive time of the motor from the preceding operating cycle thereof may be introduced in the preceding algorithm, which during operation determines the threshold value of the current at which the control unit 8 intervenes in order to interrupt the supply of the motor. Indeed, if the motor is "cold" when it starts its operating cycle, it has a different conduct than when it is still "hot" following a preceding recent operating cycle. This is due to the lubricant inside the motor and which generally has a viscosity value that is temperature sensitive.

Advantageously, the invention proposes to integrate the algorithm programmed and executed in microcontroller 12 so that in addition to considering the difference between the actual operating temperature and the calibration temperature of the device when calculating the current absorbed by motor 6, the outcomes are also considered of a preceding operating cycle.

In particular, the invention provides integrating the preceding algorithm with a second corrective coefficient $P_S$ which considers the level of inactivity of motor 6.

Therefore, the algorithm thus integrated advantageously becomes the following:

$$I_A = I_{A0}\cdot(1 + a + P_T + P_S)$$

in which the various parameters present in the algorithm discussed above have the same meaning, while coefficient $P_S$ in particular considers the fact that inactivity of motor 6 for a period of time sufficient to "cool" the motor results in - especially in the initial step of the reactivation thereof - the need to overcome a kind of thermal inertia which involves the lubricant inside motor being less fluid and results in a greater absorption of current than the one required by a motor which is already "started", which operates under the same ambient temperature conditions.

Preferably, coefficient Ps is given by the expression

$$P_S = P_{S0} + c(t - t_{stop}) - d(t - t_{start}),$$

in which:

$P_{S0}$    is the corrective coefficient at the stop instant of the motor in the preceding cycle,

c        is an empirically defined coefficient associated with the trend of the level of inactivity of motor 6 in that the greater the time the motor remained inactive after the preceding intervention thereof, the greater is c. It advantageously may be comprised between 0.001 and 0.002 and preferably is equal to 0.00167 (i.e. it is equal to 1/600); this means that for that particular value of c = 0.00167, the motor is considered completely inactive after about 10 minutes from the end of the preceding intervention thereof,

t        is the actual instant,

$t_{stop}$   is the instant at which motor 6 was stopped at the end of the preceding cycle thereof,

d        is another empirically defined coefficient associated with the trend of the modes with which the motor loses its condition of inactivity, from the start instant $t_{start}$ of the preceding actuation cycle. It advantageously may be comprised between 0.01 and 0.02 and preferably is equal to 0.0167 (i.e. it is equal to 1/60); this means that for that particular value of d = 0.0167, motor 6 employs about 1 minute to pass from the condition of complete inactivity to the condition of activity,

$t_{start}$ is the instant at which the motor was started in the preceding cycle.

Moreover, the invention advantageously provides conventionally attributing a minimum value equal to zero to $P_S$ ($P_S$ = 0) and a maximum value equal to the unit to $P_S$ ($P_S$=1) even if the application of the algorithm defined above should result in a value of $P_S$ which is negative or greater than the unit, respectively. Practically, if $P_S$<0, it is conventionally established that $P_S$=0 and if $P_S$>1, it is conventionally established that $P_S$=1.

Thanks to the invention, the control device of a motorized pergola is much more advantageous than traditional control devices and in particular, makes the conduct thereof highly uniform, even if it was calibrated under different temperature and use conditions than the ones at which it actually operates.

In particular, the algorithm programmed and executed in the microcontroller of the control unit and also the choice of the parameters provided in such an algorithm are conveniently optimized for a plurality of motors which may be specifically used for moving the blades of a pergola, and moreover they allow an increased calculation speed to be obtained with respect to reduced costs both of the hardware infrastructure of the microcontroller and of the software programming thereof.

**Claims**

1.  A control device of at least one motor (6) for moving a blade closure (2) of a pergola (4), said control device being of the type in which said motor (6) is managed by a control unit (8), which detects and controls a current absorbed by said motor (6), and which comprises a microcontroller (12) configured to control the interruption of said current when a preset threshold value $I_A$ thereof is exceeded, which corresponds to said motor (6) reaching a stroke-end position, to said microcontroller (12) of said control unit (8) being associated a temperature sensor (14) which detects and sends the temperature of the ambient $T_A$, in which said motor (6) is operating, to the input of the microcontroller (12), **characterized in that** said microcontroller (12) is programmed to calculate said preset threshold value ($I_A$), during the operation of said motor (6), by means of the following algorithm:

$$I_A = I_{A0} (1+a+P_T)$$

in which:

$I_{A0}$ corresponds to the current which was absorbed by said motor in a calibration step, with corresponding temperature conditions $T_{A0}$,
a is a first safety coefficient and the value thereof is not less than 0.1, and
$P_T$ is a second coefficient, which is associated with the difference between the ambient temperature during the calibration step $T_{A0}$ and the temperature of the ambient $T_A$ in which said motor (6) is operating and which is defined according to the following formula:

$$P_T= b (T_{A0}-T_A)$$

if $T_{A0}>T_A$ $P_T$ = 0 if $T_{A0}<T_A$
where "b" is a parameter comprised between 0.002 and 0.02.

2.  A device according to the preceding claim, **characterized in that** said first safety coefficient "a" is equal to about 0.35.

3.  A device according to one or more of the preceding claims, **characterized in that** said parameter "b" is equal to about 0.01.

4.  A device according to one or more of the preceding claims, **characterized in that** said current $I_{A0}$ absorbed by said motor in the calibration step and said ambient temperature $T_{A0}$ are detected and saved in the microcontroller (12) by means of a self-learning process.

5.  A device according to one or more of the preceding claims, **characterized in that** said threshold current $I_A$ corresponds to the calibration current $I_{A0}$ increased also with a third coefficient $P_S$ associated with the conditions of inactivity of said motor (6).

6.  A device according to claim 5, **characterized in that** said microcontroller (12) of the control unit (8) is associated with a timer, which detects and sends all operating and pause instants of said motor (6) to the input of the microcontroller (12), and **in that** in said algorithm, which is implemented in said microcontroller (12) to calculate said preset threshold value $I_A$ during the operation of said motor (6), is added a third coefficient ($P_S$) so as to have the following formula:

$$I_A = I_{A0} (1+a+P_T+P_S)$$

wherein $P_S$ is given by the expression

$$P_S = P_{S0} + c \cdot (t - t_{stop}) - d \cdot (t - t_{start}),$$

where:

$P_{S0}$ is the third corrective coefficient at the stop instant $t_{stop}$ of said motor (6) in the preceding cycle,
c is a coefficient comprised between 0.001 and 0.002 and preferably equal to 0.00167,
t is the actual instant,
$t_{stop}$ is the instant at which said motor (6) was stopped at the end of the preceding cycle thereof,
d is a coefficient comprised between 0.01 and 0.02 and preferably equal to 0.0167,
$t_{start}$ is the instant at which the motor was started in the preceding cycle.

7. A device according to claim 6, **characterized in that** conventionally $P_S$ takes on the value $P_T=1$ when said algorithm results in it having values exceeding the unit, and conventionally takes on the value $P_T=0$ when said algorithm results in it having negative values.

8. A device according to one or more of the preceding claims, **characterized in that** said control unit (8) is prepared to independently manage two motors (6) for moving the blades (2) of two separate pergolas (4).

9. A device according to one or more of the preceding claims, **characterized in that** said control unit (8) is prepared to simultaneously manage two motors (6) for moving the blades (2) of a large pergola (4).

10. A pergola comprising a blade closure (2) and at least one motor (6) for moving said blade closure (2), **characterized in that** said motor (6) is controlled by a device according to one or more of the preceding claims.

11. A pergola according to the preceding claim, **characterized in that** said motor (6) is configured to induce the rotating movement of said blades (2) about a longitudinal axis thereof.

12. A pergola according to one or more of the preceding claims, **characterized in that** said motor (6) is configured to induce the translating movement of said blades (2) between a first position wherein said blades are mutually spaced apart and a second position wherein said blades are mutually close to, preferably in contact with one another.

13. A pergola according to one or more of the preceding claims, **characterized in that** the control unit (8) of said device is configured to control at least two motors (6) for moving the closure of the blades (2) of a same pergola (4) or of different pergolas (4).

## Patentansprüche

1. Steuerungsvorrichtung von mindestens einem Motor (6) zum Bewegen eines Blattverschlusses (2) einer Pergola (4), wobei die Steuerungsvorrichtung von dem Typ ist, bei dem der Motor (6) durch eine Steuerungseinheit (8) verwaltet wird, die einen von dem Motor (6) aufgenommenen Strom detektiert und steuert und die einen Mikrocontroller (12) umfasst, der dazu ausgelegt ist, die Unterbrechung des Stroms zu steuern, wenn ein vorgegebener Schwellenwert $I_A$ davon überschritten wird, was dem entspricht, dass der Motor (6) eine Anschlagstellung erreicht, wobei der Mikrocontroller (12) der Steuerungseinheit (8) mit einem Temperatursensor (14) verbunden ist, der die Temperatur der Umgebung $T_A$, in der der Motor (6) betrieben wird, detektiert und zu dem Eingang des Mikrocontrollers (12) sendet, **dadurch gekennzeichnet, dass** der Mikrocontroller (12) dazu programmiert ist, den vorgegebenen Schwellenwert ($I_A$) während des Betriebs des Motors (6) mittels des folgenden Algorithmus zu berechnen:

$$I_A = I_{A0} \, (1 + a + P_T)$$

wobei:

$I_{A0}$ dem Strom entspricht, der von dem Motor in einem Kalibrierungsschritt, mit entsprechenden Temperaturbedingungen $T_{A0}$, aufgenommen wurde,
a ein erster Sicherheitskoeffizient ist und der Wert davon nicht kleiner als 0,1 ist und
$P_T$ ein zweiter Koeffizient ist, der verbunden ist mit dem Unterschied zwischen der Umgebungstemperatur während des Kalibrierungsschritts $T_{A0}$ und der Temperatur der Umgebung $T_A$, in der der Motor (6) betrieben wird, und der gemäß der folgenden Formel definiert ist:

$$P_T = b \, (T_{A0} - T_A),$$

wenn $T_{A0} > T_A$
$P_T = 0$, wenn $T_{A0} < T_A$
wobei "b" ein Parameter ist, der zwischen 0,002 und 0,02 enthalten ist.

2. Vorrichtung nach dem vorhergehenden Anspruch, **dadurch gekennzeichnet, dass** der erste Sicherheitskoeffizient "a" gleich etwa 0,35 ist.

3. Vorrichtung nach einem oder mehreren der vorhergehenden Ansprüche, **dadurch gekennzeichnet, dass** der Parameter "b" gleich etwa 0,01 ist.

4. Vorrichtung nach einem oder mehreren der vorhergehenden Ansprüche, **dadurch gekennzeichnet, dass** der Strom $I_{A0}$, der von dem Motor in dem Kalibrierungsschritt aufgenommen wird, und die Umgebungstemperatur $T_{A0}$ mittels eines Selbstlernprozesses detektiert und in dem Mikrocontroller (12) gespeichert werden.

5. Vorrichtung nach einem oder mehreren der vorhergehenden Ansprüche, **dadurch gekennzeichnet, dass** der Schwellenwertstrom $I_A$ dem Kalibrierungsstrom $I_{A0}$ entspricht, der auch mit einem dritten Koeffizienten $P_S$ in Verbindung mit den Inaktivitätsbedingungen des Motors (6) erhöht ist.

6. Vorrichtung nach Anspruch 5, **dadurch gekennzeichnet, dass** der Mikrocontroller (12) der Steuerungseinheit (8) mit einem Zeitmesser verbunden ist, der alle Betriebs- und Pauseninstanzen des Motors (6) detektiert und an den Eingang des Mikrocontrollers (12) sendet, und dadurch, dass bei dem Algorithmus, der in dem Mikrocontroller (12) implementiert ist, um den vorgegebenen Schwellenwert $I_A$ während des Betriebs des Motors (6) zu berechnen, ein dritter Koeffizient ($P_S$) addiert wird, um die folgende Formel zu erhalten:

$$I_A = I_{A0} (1+a+P_T+P_S)$$

wobei $P_S$ gegeben ist durch den Ausdruck

$$P_S = P_{S0} + c\,(t-t_{stop}) - d\,(t-t_{start}),$$

wobei:

$P_{S0}$ der dritte Korrekturkoeffizient an der Stoppinstanz $t_{stop}$ des Motors (6) in dem vorhergehenden Zyklus ist,
c ein Koeffizient ist, der zwischen 0,001 und 0,002 enthalten ist und vorzugsweise gleich 0,00167 ist,
t die tatsächliche Instanz ist,
$t_{stop}$ die Instanz ist, an der der Motor (6) am Ende des vorhergehenden Zyklus davon gestoppt wurde,
d ein Koeffizient ist, der zwischen 0,01 und 0,02 enthalten ist und vorzugsweise gleich 0,0167 ist,
$t_{start}$ die Instanz ist, an der der Motor in dem vorhergehenden Zyklus gestartet wurde.

7. Vorrichtung nach Anspruch 6, **dadurch gekennzeichnet, dass** herkömmlicherweise $P_S$ den Wert $P_T=1$ annimmt, wenn der Algorithmus dazu führt, dass er Werte aufweist, die die Einheit überschreiten, und herkömmlicherweise den Wert $P_T=0$ annimmt, wenn der Algorithmus dazu führt, dass er negative Werte aufweist.

8. Vorrichtung nach einem oder mehreren der vorhergehenden Ansprüche, **dadurch gekennzeichnet, dass** die Steuerungseinheit (8) konzipiert ist, um zwei Motoren (6) zum Bewegen der Blätter (2) von zwei separaten Pergolas (4) unabhängig zu verwalten.

9. Vorrichtung nach einem oder mehreren der vorhergehenden Ansprüche, **dadurch gekennzeichnet, dass** die Steuerungseinheit (8) konzipiert ist, um zwei Motoren (6) zum Bewegen der Blätter (2) einer großen Pergola (4) gleichzeitig zu verwalten.

10. Pergola, umfassend einen Blattverschluss (2) und mindestens einen Motor (6) zum Bewegen des Blattverschlusses (2), **dadurch gekennzeichnet, dass** der Motor (6) durch eine Vorrichtung nach einem oder mehreren der vorhergehenden Ansprüche gesteuert wird.

11. Pergola nach dem vorhergehenden Anspruch, **dadurch gekennzeichnet, dass** der Motor (6) dazu ausgelegt ist, die Drehbewegung der Blätter (2) um eine Längsachse davon zu induzieren.

12. Pergola nach einem oder mehreren der vorhergehenden Ansprüche, **dadurch gekennzeichnet, dass** der Motor (6) dazu ausgelegt ist, die Translationsbewegung der Blätter (2) zwischen einer ersten Position, in der die Blätter voneinander beabstandet sind, und einer zweiten Position, in der die Blätter in der Nähe voneinander, vorzugsweise in Kontakt miteinander, sind, zu induzieren.

13. Pergola nach einem oder mehreren der vorhergehenden Ansprüche, **dadurch gekennzeichnet, dass** die Steuerungseinheit (8) der Vorrichtung dazu ausgelegt ist, mindestens zwei Motoren (6) zum Bewegen des Verschlusses der Blätter (2) einer gleichen Pergola (4) oder von verschiedenen Pergolas (4) zu bewegen.

**Revendications**

1. Dispositif de commande d'au moins un moteur (6) pour déplacer une fermeture a lame (2) d'une pergola (4), du type dans lequel ledit moteur (6) est géré par une unité de commande (8), qui détecte et commande une courant absorbé par ledit moteur (6), et qui comprend un microcontrôleur (12) configuré pour contrôler l'interruption dudit courant lorsqu'une valeur de seuil prédéfinie $I_A$ de celui-ci est dépassée, ce qui correspond audit moteur (6) atteignant une position de fin course, audit microcontrôleur (12) de ladite unité de commande (8) étant associé un capteur de température (14) qui détecte et envoie la température $T_A$ de l'ambiant, dans lequel ledit moteur (6) fonctionne, à l'entrée de le microcontrôleur (12), **caractérisé en ce que** ledit microcontrôleur (12) est programmé pour calculer ladite valeur de seuil prédéfinie ($I_A$), pendant le fonctionnement dudit moteur (6), au moyen de l'algorithme suivant:

$$I_A = I_A (1 + a + P_T)$$

dans lequel:

$I_{A0}$ correspond au courant qui a été absorbé par ledit moteur lors d'une étape de calibration, avec les conditions de température correspondantes $T_{A0}$,
a est un premier coefficient de sécurité et sa valeur n'est pas inférieure à 0,1, et
$P_T$ est un deuxième coefficient, qui est associé à la différence entre la température ambiante lors de l'étape de calibration $T_{A0}$ et la température $T_A$ de l'ambiante dans laquelle ledit moteur (6) fonctionne et qui est définie selon la formule suivante:

$$P_T = b (T_{A0} - T_A)$$

si $T_{A0} > T_A$
PT = 0 si $T_{A0} < T_A$
où «b» est un paramètre compris entre 0,002 et 0,02.

**2.** Dispositif selon la revendication précédente, **caractérisé en ce que** ledit premier coefficient de sécurité "a" est égal à environ 0,35.

**3.** Dispositif selon une ou plusieurs des revendications précédentes, **caractérisé en ce que** ledit paramètre "b" est égal à environ 0,01.

**4.** Dispositif selon une ou plusieurs des revendications précédentes, **caractérisé en ce que** ledit courant $I_{A0}$ absorbé par ledit moteur lors de l'étape d'étalonnage et ladite température ambiante $T_{A0}$ sont détectés et enregistrés dans le microcontrôleur (12) au moyen d'un processus d'auto-apprentissage.

**5.** Dispositif selon une ou plusieurs des revendications précédentes, **caractérisé en ce que** ledit courant de seuil $I_A$ correspond au courant d'étalonnage $I_{A0}$

augmenté également avec un troisième coefficient $P_S$ associé aux conditions d'inactivité dudit moteur (6).

**6.** Dispositif selon la revendication 5, **caractérisé en ce que** ledit microcontrôleur (12) de l'unité de commande (8) est associé à une minuterie, qui détecte et envoie tous les instants de fonctionnement et de pause dudit moteur (6) à l'entrée du microcontrôleur (12), et **en ce que** dans ledit algorithme, qui est implémenté dans ledit microcontrôleur (12) pour calculer ladite valeur de seuil prédéfinie $I_A$ pendant le fonctionnement dudit moteur (6), est ajouté un troisième coefficient ($P_S$) de manière à avoir la formule suivante:

$$I_A = I_{A0} (1 + a + P_T + P_S)$$

où Ps est donné par l'expression

$$P_S = P_{S0} + c \cdot (t - t_{stop}) - d \cdot (t - t_{start}),$$

où:

$P_{S0}$ est le troisième coefficient correcteur à l'instant d'arrêt $t_{stop}$ dudit moteur (6) dans le cycle précédent,
c est un coefficient compris entre 0,001 et 0,002 et de préférence égal à 0,00167,
t est l'instant réel,
$t_{stop}$ est l'instant auquel ledit moteur (6) a été arrêté à la fin de son cycle précédent,
d est un coefficient compris entre 0,01 et 0,02 et de préférence égal à 0,0167,
$t_{start}$ est l'instant auquel le moteur a démarré lors du cycle précédent.

**7.** Dispositif selon la revendication 6, **caractérisé en ce que** $P_S$ prend conventionnellement la valeur $P_T$ = 1 lorsque ledit algorithme conduit à lui avoir des valeurs dépassant l'unité, et prend conventionnellement la valeur $P_T$ = 0 lorsque ledit algorithme le conduit à avoir une valeur négative.

**8.** Dispositif selon une ou plusieurs des revendications précédentes, **caractérisé en ce que** ladite unité de commande (8) est préparée pour gérer indépendamment deux moteurs (6) pour déplacer les lames (2) de deux pergolas distinctes (4).

**9.** Dispositif selon une ou plusieurs des revendications précédentes, **caractérisé en ce que** ladite unité de commande (8) est préparée pour gérer simultanément deux moteurs (6) pour déplacer les lames (2) d'une grande pergola (4).

**10.** Pergola comprenant une fermeture a lame (2) et au moins un moteur (6) pour déplacer ladite fermeture a lame (2), **caractérisée en ce que** ledit moteur (6) est commandé par un dispositif selon une ou plusieurs des revendications précédentes.

**11.** Pergola selon la revendication précédente, **caractérisée en ce que** ledit moteur (6) est configuré pour induire le mouvement de rotation desdites lames (2) autour d'un axe longitudinal de celles-ci.

**12.** Pergola selon une ou plusieurs des revendications précédentes, **caractérisée en ce que** ledit moteur (6) est configuré pour induire le mouvement de translation desdites lames (2) entre une première position dans laquelle lesdites lames sont mutuellement écartées et une seconde position dans laquelle lesdites lames sont mutuellement rapprochées, de préférence en contact les unes avec les autres.

**13.** Pergola selon une ou plusieurs des revendications précédentes, **caractérisée en ce que** l'unité de commande (8) dudit dispositif est configurée pour commander au moins deux moteurs (6) pour déplacer la fermeture des lames (2) d'une même pergola (4) ou de différentes pergolas (4).

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050156547 A

- EP 0692856 A